Europäisches Patentamt

European Patent Office

Office européen des brevets

(11) Veröffentlichungsnummer: **0 150 502**
**B1**

(12) # EUROPÄISCHE PATENTSCHRIFT

(45) Veröffentlichungstag der Patentschrift:
27.09.89

(51) Int. Cl.⁴: **H 02 P 7/06**, H 02 H 9/02

(21) Anmeldenummer: 84116362.9

(22) Anmeldetag: 27.12.84

(54) **Elektrische Schaltung.**

(30) Priorität: **02.02.84 DE 3403542**

(43) Veröffentlichungstag der Anmeldung:
**07.08.85 Patentblatt 85/32**

(45) Bekanntmachung des Hinweises auf die Patenterteilung:
**27.09.89 Patentblatt 89/39**

(84) Benannte Vertragsstaaten:
**DE FR GB IT SE**

(56) Entgegenhaltungen:
**DE-A- 1 763 270**
**DE-A- 2 149 938**
**DE-A- 2 331 708**
**FR-A- 2 469 820**

(73) Patentinhaber: **VDO Adolf Schindling AG,**
**Gräfstrasse 103, D-6000 Frankfurt/Main 90 (DE)**

(72) Erfinder: **Rathmann, Klaus, Dreikönigstrasse 8,**
**D-6000 Frankfurt-Main (DE)**

(74) Vertreter: **Klein, Thomas, Dipl.-Ing. (FH), Sodener**
**Strasse 9 Postfach 6140, D-6231 Schwalbach a. Ts. (DE)**

## Beschreibung

Die Erfindung betrifft eine Einrichtung zum Steuern eines Gleichstromstellmotors nach der Gattung des Patentanspruchs.

Aus der FR-A 2469 820 ist eine Steuervorrichtung für einen Gleichstrommotor bekannt, bei der gemäß dem Gattungsbegriff in beiden Versorgungsleitung Endschalter vorgesehen sind, die wechselweise bei Erreichen der Endstellung der durch den Stellmotor betätigten Einrichtung geöffnet werden und die Motorspeisung unterbrechen. Parallel zu den Endschaltern liegende Dioden ermöglichen den Anlauf des Stellmotors in die umgekehrte Drehrichtung, bis der zugehörige Endschalter wieder geschlossen ist. Mit der bekannten Steuervorrichtung lassen sich zwar die jeweiligen Endstellungen zuverlässig erreichen, die Endschalter müssen dafür aber exakt positioniert sein. Für viele Anwendungsfälle ist der schaltungstechnische Aufwand einer Schaltung mit zwei Endschaltern aus Kostengründen zu groß.

Aus der DE-A 1 763 270 ist es ferner bekannt, zum Schutz von Elektromotoren, die infolge großer Belastung stark abgebremst werden, in der Zuleitung einen Halbleiter mit Kaltleiterverhalten vorzusehen und diesen durch einen von der Motordrehzahl abhängigen Luftstrom zu kühlen. Dabei handelt es sich jedoch nicht um eine Steuereinrichtung, mit der Endstellungen zuverlässig erreicht und darauf der Motorstrom entscheidend reduziert werden.

Der Erfindung liegt die Aufgabe zugrunde, eine Einrichtung der eingangs genannten Art anzugeben, welche möglichst einfach im Aufbau ist, mit der sich jedoch die jeweiligen Endstellungen zuverlässig erreichen lassen.

Diese Aufgabe wird bei einer Einrichtung nach dem Gattungsbegriff erfindungsgemäß dadurch gelöst, daß die Einrichtungen zum Ausschalten des Stellmotors auf den Blockierstrom des Stellmotors ansprechende Kaltleiter sind. Solche auch unter dem Begriff «PTC-Widerstand» bekannte, elektrische Widerstände haben die Eigenschaft, sich bei Überschreiten eines bestimmten Stromflusses erheblich zu erwärmen und dadurch ihren ohmischen Widerstand stark zu erhöhen. Dieser erhöhte Widerstand bleibt erhalten, bis daß der Stromfluß vollständig unterbrochen wird. Der PTC-Widerstand ist deshalb in der Lage, den Versorgungsstrom nach Erreichen einer Blockierstellung bis auf einen vernachlässigbar kleinen Stromfluß zu reduzieren, also den Stellmotor kontaktlos abzuschalten.

Die Einrichtung ist für die Betätigung einer Luftklappe ganz besonders vorteilhaft. Da bei ihr zwei in einer Stromrichtung überbrückte Kaltleiter vorgesehen sind, wird immer nur einer der Kaltleiter vom Strom durchflossen. Das hat zur Folge, daß nach Betätigung des Stellmotors in einer Drehrichtung sofort in die andere Drehrichtung umgeschaltet werden kann, da nur der stromdurchflossene Kaltleiter heiß und damit hochohmig ist.

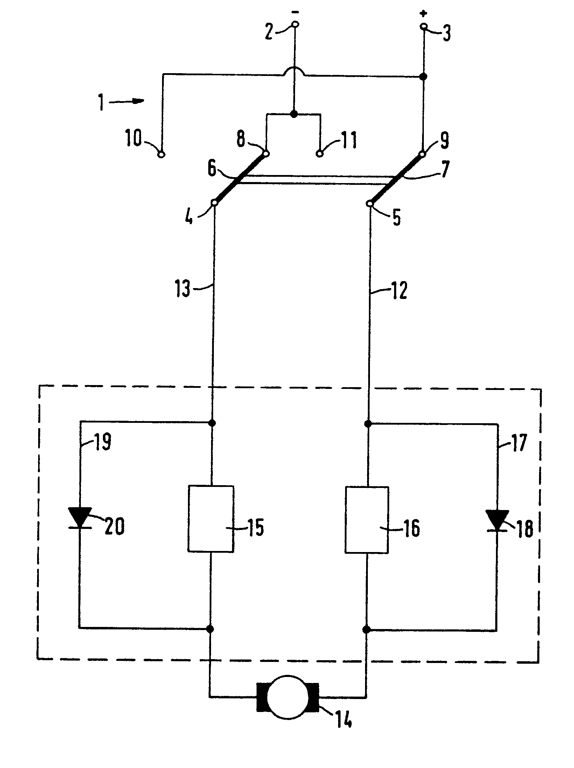

Ein Ausführungsbeispiel der Erfindung ist in der Zeichnung dargestellt und nachfolgend beschrieben. Die einzige Figur zeigt die elektrische Schaltung zum Ansteuern und zur Energieversorgung eines elektrischen Stellmotors.

Die Zeichnung zeigt einen üblichen Umschalter 1, welcher eingangsseitig zwei Klemmen 2, 3 für den Plus- und Minuspol eines elektrischen Netzes hat. Ausgangsseitig hat der Umschalter ebenfalls zwei Klemmen 4, 5, an denen je nach Stellung zweier Schaltglieder 6, 7 Plus oder Minus ansteht. Die Schaltglieder 6, 7 verbinden wahlweise die Klemmen 4, 5 mit Kontakten 8, 9 bzw. 10, 11.

Von den Klemmen 4 und 5 führen Versorgungsleitungen 12, 13 zu einem Stellmotor 14. In beiden Versorgungsleitern ist ein Kaltleiter 15, 16 geschaltet. Der Kaltleiter 16 weist eine Überbrückung 17 auf, in die eine Diode 18 geschaltet ist. Ebenso besitzt der Kaltleiter 15 eine Überbrückung 19 mit einer Diode 20. Die Durchlaßrichtung beider Dioden ist gleichsinnig.

Es sei nun angenommen, daß der Umschalter 1 soeben in die dargestellte Position geschaltet worden sei, Strom fließt dann von der Klemme 2 über das Schaltglied 6 in die Versorgungsleitung 13 und damit durch den Kaltleiter 15 zum Stellmotor 14. Der Kaltleiter 16 wird nicht wesentlich vom Strom durchflossen, da der Widerstand der Diode 18 für die Stromrichtung vom Stellmotor 14 zum Pluspol an der Klemme 3 wesentlich geringer ist als der des Kaltleiters 16. Der Stellmotor 14 läuft deshalb so lange, bis daß die von ihm zu betätigende Klappe gegen einen Anschlag gelangt. Der Strom in den Versorgungsleitungen 12, 13 steigt dann sehr stark an, nämlich auf den Blockierstrom des Stellmotors. Dadurch erwärmt sich der Kaltleiter 15 rasch, wird hochohmig und mindert den Stromfluß auf einen vernachlässigbaren Wert.

Schaltet man den Umschalter 1 in seine andere, nicht gezeigte Position, dann fließt der Strom in umgekehrte Richtung. Der Kaltleiter 16 wird dabei vom Strom durchflossen, während am Kaltleiter 15 der Strom über die Diode 20 vorbeifließt. Bei Erreichen des Blockierstromes erfolgt auf gleiche Weise, wie zuvor beschrieben, eine Begrenzung des Stromes auf eine vernachlässigbare Größe.

## Patentanspruch

Einrichtung zum Steuern eines Gleichstromstellmotors (14) mit einem Umschalter (1) zum Einschalten dieses Stellmotors in eine wahlweise Drehrichtung mit je einer Einrichtung (15, 16) zum Ausschalten des Stellmotors bei Erreichen der Endstellungen eines von dem Stellmotor betätigten Organs, insbesondere einer Luftklappe einer Klimaanlage eines Kraftfahrzeugs, in beiden Versorgungsleitungen (12, 13), die jeweils eine durch eine Diode (18, 20) in einer der beiden Stromrichtungen gesperrte Überbrückung (17, 19) haben, dadurch gekennzeichnet, daß die Einrichtungen zum Ausschalten des Stellmotors (14) auf den Blockierstrom des Stellmotors ansprechende Kaltleiter (15, 16) sind.

## Claim

Device for controlling a direct-current servomotor (14) with a changeover switch (1) for switching on this servomotor in either direction and with a device (15, 16) in each of the two supply lines (12, 13), which each has a shunt (17, 19) blocked in one of the two current directions by a diode (18, 20), for switching off the servomotor when an organ, in particular an air flap of an air-conditioning system of a motor vehicle, operated by the servomotor reaches its end positions, characterized in that the devices for switching off the servomotor (14) are thermistors (15, 16) which respond to the blocking current of the servomotor.

**Revendication**

Dispositif de commande d'un moteur (14) de réglage à courant continu, ce dispositif comportant un commutateur (1) destiné à commuter ce moteur (14) de réglage pour le faire tourner dans le sens de rotation souhaité et comportant deux dispositifs (15, 16) destinés à mettre le moteur de réglage hors-circuit lorsque sont atteintes les positions d'extrémité d'un organe actionné par le moteur de réglage, en particulier un clapet d'air d'installation de climatisation d'un véhicule à moteur, montés sur deux conducteurs (12, 13) d'alimentation, lesquels possèdent dans chaque cas un pontage (17, 19) fermé par une diode (18, 20) dans l'un des deux sens de passage du courant, caractérisé en ce que les dispositifs destinés à mettre le moteur (14) de réglage hors-circuit sont des résistances (15, 16) conductrices à froid (ou thermistances à Coéfficient de Température Positif), sensibles au courant de blocage du moteur de réglage.